# EUROPÄISCHE PATENTSCHRIFT

(11) **EP 0 919 757 B1**
(45) Veröffentlichungstag und Bekanntmachung des Hinweises auf die Patenterteilung: **14.08.2002**
(21) Anmeldenummer: 98121806.8
(22) Anmeldetag: 17.11.1998
(51) Int. Cl.: F16L 9/147, B32B 15/08, B32B 27/32, C08L 23/04, C08K 3/26

(54) **Kunststoffummanteltes Leitungsrohr**
Pipe having a plastic coating
Tuyau avec un revêtement en matière plastique

(30) Priorität: 25.11.1997 DE 19752081
(43) Veröffentlichungstag der Anmeldung: 02.06.1999
(73) Patentinhaber: Wieland-Werke AG, 89070 Ulm (DE)
(72) Erfinder: Bögel, Andreas Dipl.-Ing., Dr.rer.nat., 89264 Weissenhorn (DE); Koch, Roland Dipl.-Ing. (FH), 89165 Dietenheim (DE)

(56) Entgegenhaltungen:
- EP-A- 0 762 041
- DE-A- 19 545 582
- US-A- 4 423 181
- DATABASE WPI Derwent Publications Ltd., London, GB; AN 1984-110382 XP002131213 & JP 59 050295 A (NIPPON KOKAN), 23. März 1984 (1984-03-23)
- DATABASE WPI Derwent Publications Ltd., London, GB; AN 1980-50988C XP002131594 & JP 55 075437 A (SUMITOMO), 6. Juni 1980 (1980-06-06)

## Beschreibung

Die Erfindung betrifft ein Leitungsrohr, insbesondere Kupferrohr, mit einem Kunststoffmantel aus einer Kreide als Füllstoff, Weichmacher und Stabilisatoren enthaltenden Kunststoffmischung.

Die vorliegende Erfindung bezieht sich auf ein ummanteltes Leitungsrohr, das hauptsächlich im Bauwesen sowohl für Fußbodenheizungen als auch für die Kalt- und Warmwasserinstallation Verwendung findet. Eine Ummantelung solcher Rohre ist wünschenswert, da hierdurch einerseits eine Wärme- oder Schallisolierung durchgeführt werden kann oder andererseits eine wirksame Trennung des Leitungsmaterials von Baustoffen wie in Mörteln oder Estrichen durchgeführt werden kann. Zu diesem Zweck wurden und werden bisher vorzugsweise flexible Kunststoffe - basierend auf Polyvinylchlorid - eingesetzt. Die Verwendung solcher Ummantelungen für Warm- und Kaltwasserleitungsrohre ist seit langem bekannt. Als sehr zweckmäßig hat sich erwiesen, z. B. eine solche isolierende Ummantelung bereits bei er Herstellung von Cu-Rohren für den gesamten Zweck vorzunehmen. Der dabei auf das Metallrohr extrudierte Kunststoffmantel kann zur Erzielung besonderer Isolations-, Leitungs- oder Flexibilitätseigenschaften geeignet geometrisch gestaltet sein. Solche Maßnahmen sind beispielsweise aus der DE-OS 2.310.898 bekannt.

Der bislang häufigst verwendete Werkstoff in verschiedenen Modifikationen Polyvinylchlorid war wegen seiner gesundheits- und umweltschädlichen unmittelbaren oder mittelbaren Wirkungen verschiedentlich Ziel von Bemühungen zur Optimierung seiner Inhaltsstoffe wie mit DE-OS 195 09 585 bekannt geworden ist. Die so bekannt gewordenen Lösungen sind jedoch für den vorliegenden Zweck nicht ausreichend, da nach wie vor Polyvinylchlorid selbst zur Anwendung kommt und bekannt ist, daß sowohl die Monomeren als auch die Verbrennungsprodukte dieses Kunststoffs für die Gesundheit des Menschen und die Umwelt als äußerst bedenklich eingestuft werden müssen.

Daraus ergibt sich die Aufgabe der vorliegenden Erfindung, ein Ummantelungsverfahren vorzuschlagen, das den Verarbeitungseigenschaften von PVC sowohl bei der Coextrusion während der Herstellung des ummantelten Rohres als auch hinsichtlich seiner Verarbeitungseigenschaften im Baugewerbe und darüber hinaus auch hinsichtlich seiner Langzeiteignung im Einsatzfall gleichkommt oder übertrifft, gleichzeitig aber die unerwünschten gesundheitsschädlichen oder umweltriskanten Implikationen von PVC vermeidet.

Die Aufgabe wird erfindungsgemäß durch einen Kunststoffmantel gelöst, der folgende Zusammensetzung aufweist:
- 15 bis 45 Gew.-%: Kreide
- 8 bis 30 Gew.-%: elastomermodifiziertes Polyolefin als Weichmacher,
- 1 bis 10 Gew.-%: metallfreie Thermostabilisatoren, sowie ggf. Zusätze an Farbstoffen, Gleit- und Verarbeitungshilfsmitteln,
Rest Kunststoffmischung von Polyethylenhomopolymeren und Polyethylencopolymeren mit einem Anteil von mindestens 15 Gew.-%.

Bei polyethylen-basierten Kunststoffen lassen sich geeignete Mischungen, sogenannte Blends, herstellen, die durch gezielte Abstimmung von Polyethylenhomopolymeren und Polyethylencopolymeren mit niederer und/oder hoher Dichte, harmlosen Füllstoffen (Kreide), metallfreien Stabilisatoren die gewünschten Eigenschaften einstellen lassen.
Flüchtige oder dazu durch Zersetzungsreaktion korrosiv wirkende Weichmacher wie z. B. Vinylacetat kommen nicht zur Anwendung. Zur Erlangung einer hinreichenden Mantelflexibilität werden statt dessen elastomermodifizierte Polyolefine-Mischungen verwendet.

Das auf diese Weise herstellbare erfindungsgemäße Polyethylenblend ummantelte Cu-Rohr ist damit frei von jeglichen Pboder Cd-haltigen Stabilisatoren, umweltkritischen Additiven und bietet darüber hinaus im Brandfalle die Gewähr, daß keine oder nur eine minimale Menge giftiger Verbrennungase entsteht. Dies ist ein besonderer Vorzug gegenüber dem bisher verwendeten PVC-Material. Zur Anwendung kommt das Polyethylenblend als Granulat, das in hinlänglich bekannter Form einem Extruder zur Koextrusion um das Cu-Rohr zugeführt wird. Das Granulat kann nach Belieben durch Zugabe von Pbund Cd-freien Pigmentstoffen eingefärbt werden.

Aus der DE-OS 195 33 236 ist zwar die Verwendung eines Kunststoffmantels aus Polyethylen bekannt, es fehlen aber insbesondere jegliche Angaben über dessen genaue Zusammensetzung.

Nach einer besonderen Ausführungsform der Erfindung ist folgende Zusammensetzung des Kunststoffmantels bevorzugt:
- 25 bis 35 Gew.-%: Kreide,
- 10 bis 18 Gew.-%: elastomermodifiziertes Polyolefin,
- 1 bis 3 Gew.-%: metallfreie Thermostabilisatoren,
- 0,5 bis 3 Gew.-%: Farbstoffmischung zur Einfärbung,
- 0,2 bis 1,5 Gew.-%: Gleit- und Verarbeitungshilfsmittel,
Rest Kunststoffmischung von Polyethylenhomopolymeren und Polyethylencopolymeren.

Das Polyolefin im elastomermodifizierten Weichmacher besteht bevorzugt aus Polypropylen, Polyethylen oder Polybuten.

Die Polyethylenmischung besteht bevorzugt aus Polyethylen hoher Dichte (PE-HD), Polyethylen geringer Dichte (PE-LD) und/oder Anteilen Polyethylen sehr geringer Dichte (PE-LLD).

Der erfindungsgemäße Kunststoffmantel weist bei 40 °C eine Wärmeleitfähigkeit von 0,1 bis 0,5 W/mK, insbesondere 0,16 bis 0,35 W/mK, auf.

Das ummantelte Leitungsrohr besitzt weiterhin folgende günstigen Eigenschaften:
Bezüglich der Auflagen der Brandbeständigkeit gemäß DIN 4102 erfüllt es die Baustoffklasse B2,
es erreicht eine Wärmeformbeständigkeit von mindestens 105 °C bei belastungsfreier Auslagerung im Trockenschrank über einen Zeitraum von 100 Stunden ohne sichtbare plastische Verformungen der Ummantelung, und
die Reißdehnung gemäß DIN 53.455 beträgt mehr als 680 %.

Der erfindungsgemäße Kunststoffmantel zeichnet sich insbesondere durch einfache Herstellbarkeit und gute Handhabung aus:

Die oben genannte Kunststoffmischung läßt sich problemlos auf einem leistungsstarken Einschneckenextruder unter Produktionsbedingungen verarbeiten. Für maximale Ausstoßleistungen hat sich die Einstellung eines Temperaturprofils zwischen 160 °C und 190 °C in den verschiedenen Heizzonen des Extruders als vorteilhaft erwiesen.

In Abhängigkeit der Temperaturführung und der Extruderdrehzahl erzeugt der plastifizierte Kunststoff einen Druck von 170 bis 200 bar im Extruderkopf, so daß bei der Rohrummantelung Abziehgeschwindigkeiten zwischen 80 und 120 m/min erreichbar sind, unabhängig davon, ob die Kupferrohre mit einem Glatt- oder Stegmantel ummantelt werden.

Während bei der herkömmlichen PVC-Ummantelung immer wieder sogenannte "Brenner" d.h. schwarze, durch kurzzeitiges Ankleben in der Düse, thermisch zersetzte PVC-Reste im Mantel auftreten und zu entsprechendem Ausschuß führen, ist dieses Phänomen bei der verwendeten Kunststoffmischung nicht feststellbar. Die Reduzierung der Ausschußmessungen und die damit einhergehende Produktivitätssteigerung runden den positiven Gesamteindruck ab.

Bei umfangreichen Feldversuchen hat sich die glatte Manteloberfläche als besonders handfreundlich beim Verlegen erwiesen. Ferner ist aufgrund der niederen Mantelhärte, die im Bereich von 80 bis 92 Shore Härte A liegt und der hohen Mantelflexibilität die Rohrverlegung, im Vergleich zu PVCummantelten Rohren, mit deutlich geringerem Kraftaufwand möglich.

## Patentansprüche

1. Leitungsrohr, insbesondere Kupferrohr, mit einem Kunststoffmantel aus einer Kreide als Füllstoff, Weichmacher und Stabilisatoren enthaltenden Kunststoffmischung,
**dadurch gekennzeichnet,**
**daß** der Kunststoffmantel folgende Zusammensetzung aufweist:
15 bis 45 Gew.-% Kreide
8 bis 30 Gew.-% elastomermodifiziertes Polyolefin als Weichmacher,
1 bis 10 Gew.-% metallfreie Thermostabilisatoren, sowie ggf. Zusätze an Farbstoffen, Gleit- und Verarbeitungshilfsmitteln,
Rest Kunststoffmischung von Polyethylenhomopolymeren und Polyethylencopolymeren mit einem Anteil von mindestens 15 Gew.-%.

2. Leitungsrohr nach Anspruch 1,
**dadurch gekennzeichnet, daß** der Kunststoffmantel folgende Zusammensetzung aufweist:
25 bis 35 Gew.-% Kreide,
10 bis 18 Gew.-% elastomermodifiziertes Polyolefin,
1 bis 3 Gew.-% metallfreie Thermostabilisatoren,
0,5 bis 3 Gew.-% Farbstoffmischung zur Einfärbung,
0,2 bis 1,5 Gew.-% Gleit- und Verarbeitungshilfsmittel,
Rest Kunststoffmischung von Polyethylenhomopolymeren und Polyethylencopolymeren.

3. Leitungsrohr nach Anspruch 1 oder 2,
**dadurch gekennzeichnet, daß** das Polyolefin im elastomermodifizierten Weichmacher aus Polypropylen, Polyethylen oder Polybuten besteht.

4. Leitungsrohr nach einem oder mehreren der Ansprüche 1 bis 3,
**dadurch gekennzeichnet, daß** die Polyethylenmischung aus Polyethylen hoher Dichte (PE-HD), Polyethylen geringer Dichte (PE-LD) und/oder Anteilen Polyethylen sehr geringer Dichte (PE-LLD) besteht.

5. Leitungsrohr nach einem oder mehreren der Ansprüche 1 bis 4,
**dadurch gekennzeichnet, daß** der Kunststoffmantel eine Wärmeleitfähigkeit von 0,1 bis 0,5 W/mK bei 40 °C hat.

6. Leitungsrohr nach Anspruch 5,
**dadurch gekennzeichnet, daß** der Kunststoffmantel eine Wärmeleitfähigkeit von 0,16 bis 0,35 W/mK bei 40 °C hat.

7. Leitungsrohr nach einem oder mehreren der Ansprüche 1 bis 6,
**dadurch gekennzeichnet, daß** es bezüglich der Auflagen der Brandbeständigkeit gemäß DIN 4102 die Baustoffklasse B2 erfüllt.

8. Leitungsrohr nach einem oder mehreren der Ansprüche 1 bis 7,
**dadurch gekennzeichnet, daß** es die Wärmeformbeständigkeit von mindestens 105 °C erreicht.

## Claims

1. Tube, in particular tube made of copper, with a sheath made of a plastic mixture containing chalk as filller, plasticizers and stabilizers, **characterized in that** the plastic sheath is composed of the following components:
15 to 45 % by weight of chalk,
8 to 30 % by weight of elastomer modified polyolefin as plasticizer,
1 to 10 % by weight of metal-free thermal stabilizers and, if necessary, additives as colorants, lubricants and auxiliary materials for improved processability,
remainder plastic mixture composed of polyethylene homopolymers and polyethylene copolymers in a proportion of at least 15 % by weight.

2. Tube according to claim 1, **characterized in that** the plastic sheath is composed of the following components:
25 to 35 % by weight of chalk,
10 to 18 % by weight of elastomer modified polyolefin,
1 to 3 % by weight of metal-free thermal stabilizers,
0.5 to 3 % by weight colorant mixture for coloration,
0.2 to 1.5 % by weight lubricants and auxiliary materials for improved processability,
remainder plastic mixture of polyethylene homopolymers and polyethylene copolymers.

3. Tube according to claim 1 or 2, **characterized in that** the polyolefin in the elastomer modified plasticizer consists of polypropylene, polyethylene or polybutene.

4. Tube according to one or more of claims 1 to 3, **characterized in that** the polyethylene mixture consists of high density polyethylene (PE-HD), low density polyethylen (PE-LD) and/or linear low density polyethylene (PE-LLD).

5. Tube according to one or more of claims 1 to 4, **characterized in that** the plastic sheath has a thermal conductivity of 0.1 to 0.5 W/mK at 40 °C.

6. Tube according to claim 5, **characterized in that** the plastic sheath has a thermal conductivity of 0.16 to 0.35 W/mK at 40 °C.

7. Tube according to one or more of claims 1 to 6, **characterized in that** it meets the requirements of flammability classification B2 to DIN 4102.

8. Tube according to one or more of claims 1 to 7, **characterized in that** it achieves heat stability performance of min. 105 °C.

## Revendications

1. Tube, en particulier tube en cuivre, comportant une enveloppe en matière plastique constituée par un mélange de matière plastique contenant de la craie à titre de matière de charge, un plastifiant et des stabilisateurs, **caractérisé en ce que** l'enveloppe en matière plastique présente la composition suivante :
15 à 45 % en poids de craie,
8 à 30 % en poids de polyoléfine à modification élastomère à titre de plastifiant,
1 à 10 % en poids de stabilisateurs thermiques exempts de métal,
ainsi que le cas échéant des additifs de colorants, d'agents auxiliaires de glissement et de traitement,
le reste étant un mélange de matières plastiques de homo-polymères de polyéthylène et de copolymères de polyéthylène en proportion d'au moins 15 % en poids.

2. Tube selon la revendication 1, **caractérisé en ce que** l'enveloppe en matière plastique présente la composition suivante :
25 à 35 % en poids de craie,
10 à 18 % en poids de polyoléfine à modification élastomère,
1 à 3 % en poids de stabilisateurs thermiques exempts de métal,
0,5 à 3 % en poids de mélange de colorants pour la coloration,
0,2 à 1,5 % en poids d'agents auxiliaires de glissement et de traitement,
le reste étant un mélange de matière plastique de homo-polymères de polyéthylène et de copolymères de polyéthylène.

3. Tube selon l'une ou l'autre des revendications 1 et 2, **caractérisé en ce que** la polyoléfine dans le plastifiant à modification élastomère est constituée en polypropylène, en polyéthylène ou en polybutène.

4. Tube selon l'une ou plusieurs des revendications 1 à 3, **caractérisé en ce que** le mélange de polyéthylène est constitué de polyéthylène de haute densité (PE-HD), de polyéthylène de faible densité (PE-LD) et/ou de parts de polyéthylène de très faible densité (PE-LLD).

5. Tube selon l'une ou plusieurs des revendications 1 à 4, **caractérisé en ce que** l'enveloppe en matière plastique présente une conductivité thermique de 0,1 à 0,5 W/mK à 40°C.

6. Tube selon la revendication 5, **caractérisé en ce que** l'enveloppe en matière plastique présente une conductivité thermique de 0,16 à 0,35 W/mK à 40°C.

7. Tube selon l'une ou plusieurs des revendications 1 à 6, **caractérisé en ce que**, par référence aux prescriptions de la résistance anti-incendie selon la norme DIN 4102, il correspond à la classe des matériaux de construction B2.

8. Tube selon l'une ou plusieurs des revendications 1 à 7, **caractérisé en ce qu'**il présente une résistance à la déformation thermique jusqu'à au moins 105°C.
